# EUROPEAN PATENT SPECIFICATION

(11) **EP 4 520 550 B1**
(45) Date of publication and mention of the grant of the patent: **28.01.2026**
(21) Application number: 24196207.5
(22) Date of filing: 23.08.2024
(51) Int. Cl.: B60C 11/03, B60C 11/12

(54) **HEAVY DUTY TIRE**
SCHWERLASTREIFEN
PNEU POUR POIDS LOURDS

(30) Priority: 06.09.2023 JP 2023144507
(43) Date of publication of application: 12.03.2025
(73) Proprietor: Sumitomo Rubber Industries, Ltd., Kobe-shi, Hyogo 651-0072 (JP)
(72) Inventor: MUTO, Yusuke, Kobe-shi, 651-0072 (JP)
(74) Representative: Manitz Finsterwald Patent- und Rechtsanwaltspartnerschaft mbB

(56) References cited:
- JP-A- 2010 126 076
- JP-A- 2010 274 846
- JP-A- 2014 065 328
- JP-A- 2018 095 156
- JP-A- H04 230 407
- US-A1- 2017 232 800
- US-A1- 2022 111 684

## Description

### BACKGROUND OF THE INVENTION

### Field of the Invention

The present invention relates to a heavy duty tire.

### Background Art

Japanese Laid-Open Patent Publication No. 2017-043208 discloses a heavy duty tire having improved uneven wear resistance while maintaining wet performance by improving the arrangement of shallow grooves and sipes on a tread portion.

JP H04 230407 A discloses a tire according to the preamble of claim 1. Other prior art is known from JP 2018 095156 A, JP 2010 274846 A, US 2022/111684 Al, US 2017/232800 Al, JP 2010 126076 A and JP 2014 065328 A.

The improvement in performance of vehicles has required tires having further improved wet performance. Meanwhile, fuel consumption performance of tires also tends to be prioritized in recent years.

The present invention has been made in view of the above circumstances, and a main object of the present invention is to provide a heavy duty tire having improved wet performance while maintaining fuel consumption performance.

### SUMMARY OF THE INVENTION

A heavy duty tire includes a tread portion, wherein the tread portion includes a pair of crown circumferential grooves continuously extending in a tire circumferential direction, and a crown region between the pair of crown circumferential grooves, the crown region includes a plurality of crown land portions demarcated by at least one circumferential sipe continuously extending in the tire circumferential direction, at least one of the plurality of crown land portions is a first crown land portion on which a plurality of lateral sipes fully crossing a tread surface of the crown land portion in a tire axial direction are provided, the plurality of lateral sipes include first lateral sipes and second lateral sipes, each first lateral sipe has a constant depth over an entire range in a sipe length direction thereof, and each second lateral sipe includes a shallow bottom portion located in a center portion in a sipe length direction thereof, where a depth thereof is partially reduced.

As a result of adopting the above-described configuration, the heavy duty tire of the present invention can improve wet performance while maintaining fuel consumption performance.

### BRIEF DESCRIPTION OF THE DRAWINGS

FIG. 1 is a development view of a tread portion of a tire according to one embodiment of the present invention;
FIG. 2 is an enlarged view of a crown region in FIG. 1;
FIG. 3 is a cross-sectional view taken along a line A-A in FIG. 2;
FIG. 4 is a cross-sectional view taken along a line B-B in FIG. 2;
FIG. 5 is a cross-sectional view taken along a line C-C in FIG. 2;
FIG. 6 is a cross-sectional view taken along a line D-D in FIG. 2;
FIG. 7 is a cross-sectional view taken along a line E-E in FIG. 2;
FIG. 8 is an enlarged view of a shoulder land portion in FIG. 1; and
FIG. 9 is an enlarged cross-sectional view of a first lateral sipe and a second lateral sipe according to another embodiment of the present invention.

### DETAILED DESCRIPTION

Hereinafter, an embodiment of the present invention will be described with reference to the drawings. The drawings are depicted so as to include the features of the present invention, but may contain exaggerated expressions and expressions that differ from the dimensional ratio of the actual structure in order to help the understanding of the present invention. In addition, the same or common elements are denoted by the same reference characters throughout each embodiment, and the redundant description thereof is omitted.

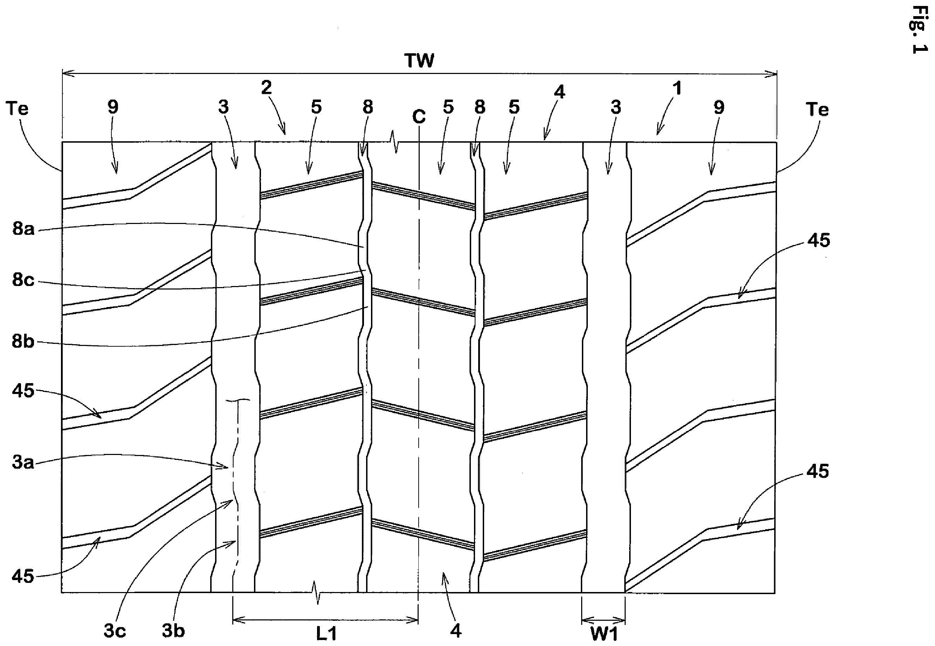

FIG. 1 is a development view of a tread portion 2 of a heavy duty tire (hereinafter, may be simply referred to as "tire") 1 according to the present embodiment. As shown in FIG. 1, the tire 1 of the present embodiment is a heavy duty pneumatic tire to be suitably used for, for example, a truck or a bus, and has a tire size of 295/80R22.5. However, the present invention is not limited to such a mode.

As shown in FIG. 1, the tread portion 2 of the tire 1 according to the present invention has two tread ends Te. Each of the two tread ends Te is a ground-contact position on the outermost side in a tire axial direction when a standardized load is applied to the tire 1 in a standardized state and the tire 1 is brought into contact with a flat surface at a camber angle of 0°.

In the case of a pneumatic tire for which various standards are defined, the "standardized state" is a state where the tire is fitted on a standardized rim and inflated to a standardized internal pressure and no load is applied thereto. In the case of a tire for which various standards are not defined, the standardized state means a standard use state, corresponding to the purpose of use of the tire, where no load is applied thereto. In the present specification, unless otherwise specified, dimensions and the like of components of the tire are values measured in the standardized state.

The "standardized rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

In the case of a pneumatic tire for which various standards are defined, the "standardized load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. In the case of a tire for which various standards are not defined, the "standardized load" refers to the maximum load applicable when the tire is used, according to the above-described standards.

The tread portion 2 includes a pair of crown circumferential grooves 3 continuously extending in a tire circumferential direction between the two tread ends Te. In the present embodiment, the pair of crown circumferential grooves 3 are provided with a tire equator C therebetween. In a preferable mode, the pair of crown circumferential grooves 3 are provided symmetrically with respect to the tire equator C. A distance L1 in the tire axial direction from the tire equator C to a groove center line of the crown circumferential groove 3 is, for example, 20% to 30% of a tread width TW. The tread width TW corresponds to a distance in the tire axial direction from one of the tread ends Te to the other of the tread ends Te in the standardized state.

In the present specification, the "groove" means a recess having a longitudinal direction and including two inner walls that do not contact with each other even in a state where the standardized load is applied thereto. A groove width W1 of the crown circumferential groove 3 of the present embodiment is, for example, not less than 3.0 mm and preferably 4.0% to 8.0% of the tread width TW. In addition, the depth of the crown circumferential groove 3 is, for example, 10 to 25 mm and preferably 15 to 20 mm. However, the present invention is not limited to such a mode.

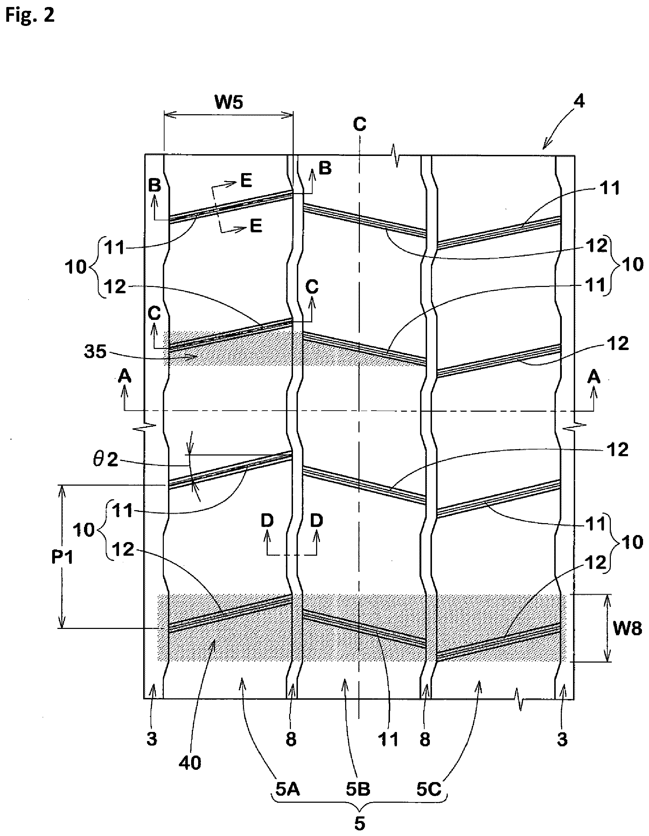

The tread portion 2 includes a crown region 4 between the pair of crown circumferential grooves 3. FIG. 2 is an enlarged view of the crown region 4. As shown in FIG. 2, the crown region 4 includes a plurality of crown land portions 5 demarcated by at least one circumferential sipe 8 continuously extending in the tire circumferential direction.

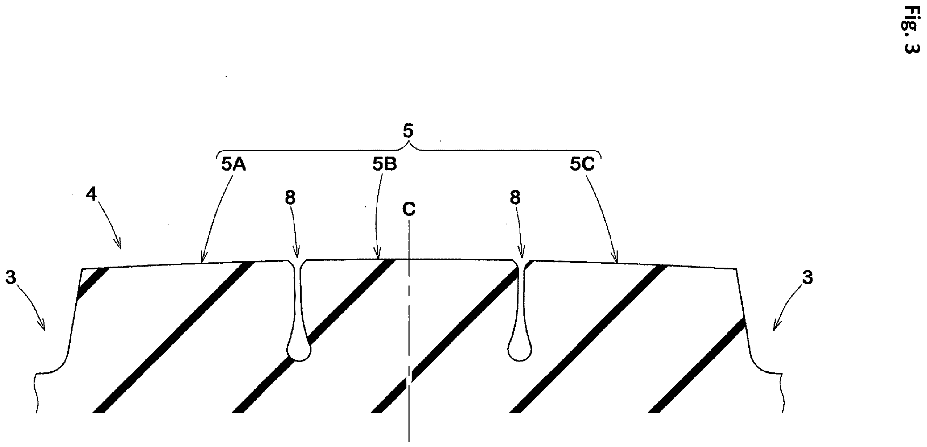

FIG. 3 is a cross-sectional view taken along a line A-A in FIG. 2. As shown in FIG. 3, in the present specification, the "sipe" means a recess having a longitudinal direction and including a region in which two inner walls contact with each other in a state where the standardized load is applied to a ground-contact surface. The width of the region is less than 1.5 mm and preferably 0.5 to 1.2 mm. The sipe may include a region in which the two inner walls do not contact with each other in the state where the standardized load is applied thereto. The specific shape of the circumferential sipe 8 of the present embodiment will be described below.

As shown in FIG. 2 and FIG. 3, the crown region 4 of the present embodiment includes three crown land portions 5 demarcated by two circumferential sipes 8. However, the present invention is not limited to such a mode. That is, the crown region 4 may include two crown land portions 5 demarcated by one circumferential sipe 8 or four crown land portions 5 demarcated by three circumferential sipes 8.

As shown in FIG. 2, in the present invention, at least one of the plurality of crown land portions 5 is a first crown land portion 5A on which a plurality of lateral sipes 10 fully crossing a tread surface of the crown land portion 5 in the tire axial direction are provided.

The crown region 4 of the present embodiment includes the above-described first crown land portion 5A, a second crown land portion 5B, and a third crown land portion 5C. The first crown land portion 5A is provided on one side in the tire axial direction (the left side in FIG. 2), and is demarcated between the crown circumferential groove 3 and the circumferential sipe 8. The second crown land portion 5B is located on the tire equator C, and is demarcated between the two circumferential sipes 8. The second crown land portion 5B is adjacent to the first crown land portion 5A across the circumferential sipe 8. The third crown land portion 5C is provided on the other side in the tire axial direction (the right side in FIG. 2), and is demarcated between the crown circumferential groove 3 and the circumferential sipe 8. The third crown land portion 5C is adjacent to the second crown land portion 5B across the circumferential sipe 8. The first crown land portion is not limited to the embodiment shown in FIG 2. In another embodiment, crown land portion 5B is the first crown land portion, and crown land portions 5A and 5C are the second and third crown land portions or 5C and 5A are the second and third crown land portions. In still another embodiment, crown land portion 5C is the first crown land portion, and crown land portions 5A and 5B are the second and third crown land portions, or 5B and 5A are the second and third crown land portions. In the present embodiment, the lateral sipes 10, which are substantially the same as the lateral sipes 10 provided on the first crown land portion 5A, are provided on the second crown land portion 5B and the third crown land portion 5C. Therefore, the configurations of the lateral sipes 10 provided on the first crown land portion 5A described below can be applied to the lateral sipes 10 provided on the second crown land portion 5B and the third crown land portion 5C.

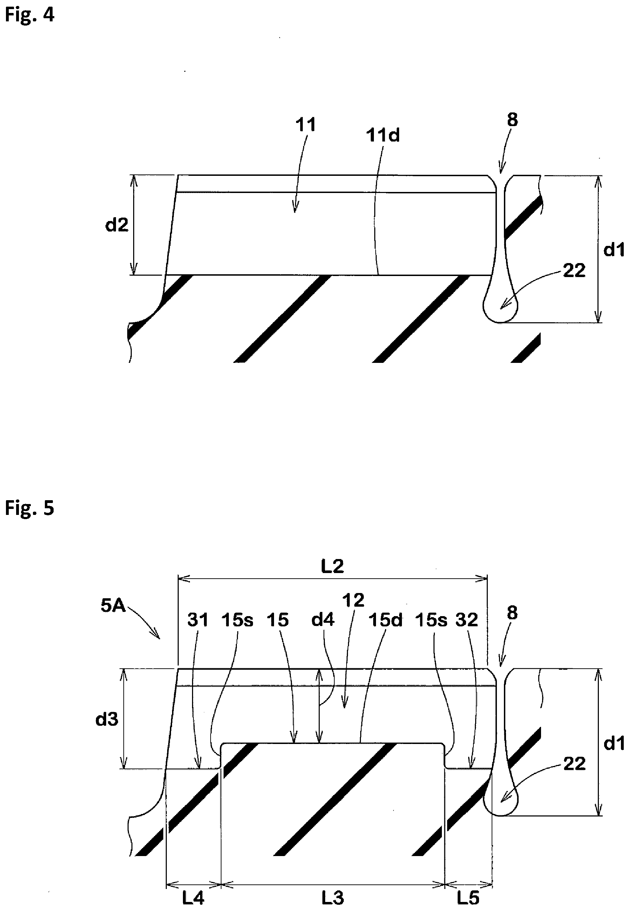

The plurality of lateral sipes 10 include first lateral sipes 11 and second lateral sipes 12. FIG. 4 is a cross-sectional view taken along a line B-B in FIG. 2, as a diagram showing a cross section of each first lateral sipe 11. FIG. 5 is a cross-sectional view taken along a line C-C in FIG. 2, as a diagram showing a cross section of each second lateral sipe 12. As shown in FIG. 4 and FIG. 5, in the present invention, the first lateral sipe 11 has a constant depth over the entire range in a sipe length direction thereof. On the other hand, the second lateral sipe 12 includes a shallow bottom portion 15 located in a center portion in a sipe length direction thereof, where the depth thereof is partially reduced. As a result of adopting the above-described configuration, the tire 1 of the present invention can thus improve wet performance while maintaining fuel consumption performance. The mechanism is as follows.

Since the tire 1 of the present invention includes the above-described pair of crown circumferential grooves 3 as shown in FIG. 2, these circumferential grooves can exhibit sufficient drainage performance. In addition, the crown region 4 includes the plurality of crown land portions 5 demarcated by the circumferential sipes 8. Such a crown region 4 has a higher stiffness than a region demarcated by a conventional circumferential groove, so that fuel consumption performance can be maintained.

In addition, at least one of the plurality of crown land portions 5 is the above-described first crown land portion 5A on which the lateral sipes 10 are provided. The plurality of lateral sipes 10 exert a frictional force in the tire circumferential direction on a wet road surface, and serves to improve wet performance. In addition, as shown in FIG. 4, the first lateral sipe 11 has a constant depth over the entire range in the sipe length direction. Such a first lateral sipe 11 can exert a great frictional force on a wet road surface. On the other hand, since the second lateral sipe 12 includes the shallow bottom portion 15 as shown in FIG. 5, a decrease in the stiffness of the first crown land portion 5A can be inhibited and fuel consumption performance can be maintained. Therefore, in the present invention, with these lateral sipes 10, wet performance can be improved while fuel consumption performance is maintained.

Hereinafter, more detailed configurations of the present embodiment will be described. The configurations described below show a specific aspect of the present embodiment. Therefore, it is needless to say that the present invention can exhibit the above-described effect even when the configurations described below are not provided. In addition, even when any one of the configurations described below is independently applied to the tire 1 according to the present invention having the above-described characteristics, performance improvement corresponding to each configuration can be expected. Furthermore, when some of the configurations described below are applied in combination, complex performance improvement corresponding to each configuration can be expected.

As shown in FIG. 1, the tread portion 2 of the present embodiment has a substantially symmetric pattern with respect to the tire equator C. In addition, as grooves continuously extending in the tire circumferential direction, only the pair of crown circumferential grooves 3 are provided on the tread portion 2. As sipes continuously extending in the tire circumferential direction, only two circumferential sipes 8 are provided on the tread portion 2. Thus, the tread portion 2 has a high stiffness, so that fuel consumption performance can be assuredly maintained.

From the viewpoint of improving fuel consumption performance and wet performance in a well-balanced manner, a land ratio of the tread portion 2 is preferably 80% to 95%. The "land ratio" means the ratio of an actual ground-contact area to the area of a virtual ground-contact surface obtained by filling all the grooves and the sipes on the ground-contact surface of the tread portion 2.

Each crown circumferential groove 3, for example, extends in a zigzag manner. The crown circumferential groove 3 of the present embodiment includes first linear groove portions 3a and second linear groove portions 3b extending at an angle of 5° or less relative to the tire circumferential direction, and inclined groove portions 3c therebetween. The second linear groove portions 3b are located on the tire equator C side with respect to the first linear groove portions 3a. In addition, the inclined groove portions 3c are inclined at an angle of 15 to 25° relative to the tire circumferential direction. The length in the tire circumferential direction of each inclined groove portion 3c is less than the length in the tire circumferential direction of each first linear groove portion 3a and is less than the length in the tire circumferential direction of each second linear groove portion 3b. Such crown circumferential grooves 3 can exhibit excellent drainage performance.

As shown in FIG. 2, a maximum width W5 in the tire axial direction of the first crown land portion 5A is, for example, 10% to 20% of the tread width TW (shown in FIG. 1). In the present embodiment, the second crown land portion 5B and the third crown land portion 5C also have the same width as the first crown land portion 5A. Thus, fuel consumption performance and wet performance can be enhanced in a well-balanced manner while wear resistance is maintained.

Each circumferential sipe 8, for example, extends in a zigzag manner. As shown in FIG. 1, the circumferential sipe 8 of the present embodiment includes first linear sipe portions 8a and second linear sipe portions 8b extending at an angle of 5° or less, and inclined sipe portions 8c therebetween. The second linear sipe portions 8b are located on the tire equator C side with respect to the first linear sipe portions 8a. In addition, the inclined sipe portions 8c are inclined at an angle of 15 to 25° relative to the tire circumferential direction. The length in the tire circumferential direction of each inclined sipe portion 8c is less than the length in the tire circumferential direction of each first linear sipe portion 8a and is less than the length in the tire circumferential direction of each second linear sipe portion 8b. When a ground-contact load acts on the circumferential sipe 8, two sipe walls of such a circumferential sipe 8 can be more firmly engaged with each other, which serves to assuredly improve wear resistance and fuel consumption performance.

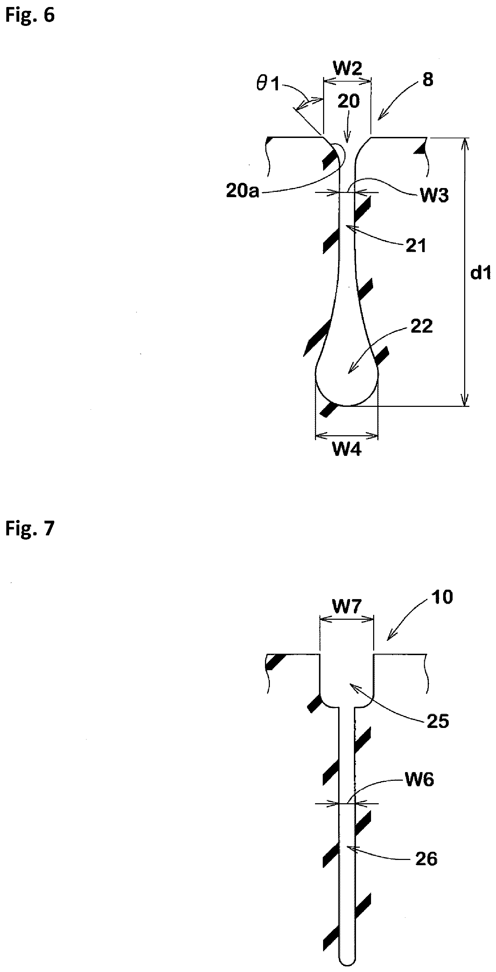

FIG. 6 is a cross-sectional view taken along a line D-D in FIG. 2, as an enlarged cross-sectional view of each circumferential sipe 8. As shown in FIG. 6, the circumferential sipe 8 of the present embodiment opens through a chamfered portion 20. The chamfered portion 20, for example, includes two inclined surfaces 20a inclined at an angle θ1 of 40 to 50° relative to a tire radial direction. As a result, an opening width W2 of the circumferential sipe 8 is, for example, 2.5 to 3.5 mm. Such circumferential sipes 8 inhibit uneven wear around the edges of the sipes and serve to enhance wear resistance.

The circumferential sipe 8, for example, includes a sipe body 21 and a widened portion 22. The sipe body 21 is connected to the inner side in the tire radial direction of the chamfered portion 20, and extends with a constant width W3 in the tire radial direction. The width W3 is, for example, 0.8 to 1.2 mm. When a ground-contact load acts on the circumferential sipe 8, the two sipe walls may come into contact with each other at the sipe body 21. The widened portion 22 is connected to the inner side in the tire radial direction of the sipe body 21. The widened portion 22 has a greater width than the width W3 of the sipe body 21. A maximum width W4 of the widened portion 22 is, for example, 3.0 to 4.5 times the width W3 of the sipe body 21. In addition, a bottom portion of the circumferential sipe 8 of the present embodiment is formed by the widened portion 22. Thus, even when a ground-contact load acts on the circumferential sipe 8, the widened portion 22 is not closed. With such circumferential sipes 8, the stiffness of the crown region 4 can be maintained while sufficient wet performance is ensured.

From the viewpoint of assuredly exhibiting the above-described effects, a maximum depth d1 of the circumferential sipe 8 is, for example, preferably 90% to 100% of the maximum depth of the crown circumferential groove 3 (shown in FIG. 1).

As shown in FIG. 2, the lateral sipes 10 of the present embodiment linearly extend so as to be inclined relative to the tire axial direction. Specifically, the lateral sipes 10 provided on one crown land portion 5 are inclined in the same direction, and, in a preferable mode, the lateral sipes 10 extend so as to be parallel to each other. An angle θ2 of each lateral sipe 10 relative to the tire axial direction is, for example, 5 to 20°. Such lateral sipes 10 can exert a frictional force also in the tire axial direction on a wet road surface.

FIG. 7 is a cross-sectional view taken along a line E-E in FIG. 2, as an enlarged cross-sectional view of each lateral sipe 10. As shown in FIG. 7, the lateral sipe 10 of the present embodiment includes a chamfered portion 25 recessed and formed in a rectangular shape, and a sipe body 26 extending with a constant width W6 from the chamfered portion 25 to a bottom portion thereof. As a result, an opening width W7 of the lateral sipe 10 is, for example, 1.5 to 2.5 mm. In addition, the width W6 of the sipe body 26 of the lateral sipe 10 is 0.4 to 0.8 mm. In a more preferable mode, the opening width W7 of the lateral sipe 10 is less than the opening width W2 of the circumferential sipe 8 (shown in FIG. 6). In addition, the width W6 of the sipe body 26 of the lateral sipe 10 is less than the width W3 of the sipe body 21 of the circumferential sipe 8 (shown in FIG. 6). Such lateral sipes 10 can assuredly maintain the stiffness of the crown land portion 5 and serve to exhibit excellent fuel consumption performance and wear resistance. The characteristics of the cross-sectional shape of the lateral sipe 10 shown in FIG. 7 can be applied to each first lateral sipe 11 and each second lateral sipe 12 (shown in FIG. 2).

As shown in FIG. 4, a depth d2 of the first lateral sipe 11 is, for example, 60% to 75% of the maximum depth d1 of the circumferential sipe 8. In a preferable mode, a bottom portion 11d of the first lateral sipe 11 is connected to the widened portion 22 of the circumferential sipe 8. Such a first lateral sipe 11 has a sufficient depth and thus is easily opened, so that a frictional force can be assuredly exhibited on a wet road surface.

As show in FIG. 5, a maximum depth d3 of the second lateral sipe 12 is, for example, 80% to 120% of the depth d2 of the first lateral sipe 11 (shown in FIG. 4), and the maximum depth d3 and the depth d2 are preferably equal. Thus, the uneven wear of each crown land portion 5 (shown in FIG. 2) is inhibited.

The shallow bottom portion 15 of the second lateral sipe 12 is preferably located outward of the widened portion 22 of the circumferential sipe 8 in the tire radial direction. More specifically, a bottom surface 15d of the shallow bottom portion 15 is located outward of a maximum-width position of the widened portion 22 in the tire radial direction. In addition, a minimum depth d4 of the shallow bottom portion 15 of the second lateral sipe 12 is 45% to 55% of the maximum depth d1 of the circumferential sipe 8. Such a second lateral sipe 12 serves to enhance fuel consumption performance and wet performance in a well-balanced manner.

The second lateral sipe 12 has a constant depth in a region other than the shallow bottom portion 15. In addition, the shallow bottom portion 15 of the present embodiment has two side surfaces 15s extending so as to be parallel to the tire radial direction. The shallow bottom portion 15 is, for example, located so as to include a center position in the sipe length direction of the second lateral sipe 12, and, in a preferable mode, is formed symmetrically with respect to the center position. A length L3 (a value obtained by measuring the shallow bottom portion 15 at center positions in the tire radial direction of the side surfaces 15s) in the tire axial direction of the shallow bottom portion 15 is 65% to 80% of a length L2 in the tire axial direction (the length on a tread surface of the first crown land portion 5A) of the second lateral sipe 12. Such a shallow bottom portion 15 exhibits an appropriate reinforcing effect, so that wear resistance and fuel consumption performance can be assuredly maintained.

The second lateral sipe 12 includes a first deep bottom portion 31 located on one side in the tire axial direction of the shallow bottom portion 15 and a second deep bottom portion 32 located on the other side in the tire axial direction of the shallow bottom portion 15. The first deep bottom portion 31 and the second deep bottom portion 32 each have a constant depth and the constant depth corresponds to the maximum depth of the second lateral sipe 12. From the viewpoint of more assuredly maintaining wear resistance and fuel consumption performance, it is preferable that the length L3 in the tire axial direction of the shallow bottom portion 15 is greater than a length L4 in the tire axial direction of the first deep bottom portion 31 (the length of a bottom surface of the first deep bottom portion 31), and is greater than a length L5 in the tire axial direction of the second deep bottom portion 32 (the length of a bottom surface of the second deep bottom portion 32).

As shown in FIG. 2, the lateral sipes 10 provided on the first crown land portion 5A are inclined in a first direction (upward toward the right side in the FIG. 2) relative to the tire axial direction. In addition, the lateral sipes 10 provided on the second crown land portion 5B adjacent to the first crown land portion 5A across the circumferential sipe 8 are inclined in a second direction (downward toward the right side in FIG. 2) opposite to the first direction relative to the tire axial direction. Further, the lateral sipes 10 provided on the third crown land portion 5C adjacent to the second crown land portion 5B across the circumferential sipe 8 are inclined in the first direction relative to the tire axial direction. With such arrangement of the lateral sipes 10, the uneven wear of each crown land portion 5 is inhibited, and frictional forces can be exerted in multiple directions on a wet road surface, so that wet performance can be further improved.

In a tread plan view, the plurality of lateral sipes 10 provided on the first crown land portion 5A are preferably arranged so as to respectively overlap, in the tire circumferential direction, the lateral sipes 10 provided on the second crown land portion 5B. This configuration means that, in a tread plan view, each lateral sipe 10 provided on the first crown land portion 5A overlaps a virtual region 35 (marked with dots in FIG. 2, for easy understanding) obtained by extending the lateral sipe 10 provided on the second crown land portion 5B so as to be parallel to the tire axial direction. Thus, the two sipes aligned in the tire axial direction cooperate to exert a frictional force in the tire circumferential direction, and traction on a wet road surface can be further enhanced.

In order to assuredly exhibit the above-described effects, the plurality of lateral sipes 10 provided on the second crown land portion 5B are preferably arranged so as to respectively overlap, in the tire circumferential direction, the lateral sipes 10 provided on the third crown land portion 5C.

In a more preferable mode, in a tread plan view, the entirety of one lateral sipe 10 provided on the first crown land portion 5A, the entirety of one lateral sipe 10 provided on the second crown land portion 5B, and the entirety of one lateral sipe 10 provided on the third crown land portion 5C are arranged so as to be within one virtual belt 40 (marked with dots in FIG. 2) extending, with a constant width W8, so as to be parallel to the tire axial direction. In addition, the width W8 of the virtual belt 40 is not greater than 50% of a one-pitch length P1 in the tire circumferential direction for the lateral sipes 10 provided on the first crown land portion 5A. Thus, the sipes aligned in the tire axial direction easily become opened, so that a greater frictional force can be exhibited on a wet road surface.

In the present embodiment, in a tread plan view, the first lateral sipes 11 provided on the first crown land portion 5A are arranged so as to overlap, in the tire circumferential direction, the second lateral sipes 12 provided on the second crown land portion 5B. The second lateral sipes 12 provided on the first crown land portion 5A are arranged so as to overlap, in the tire circumferential direction, the first lateral sipes 11 provided on the second crown land portion 5B. Similarly, in a tread plan view, the first lateral sipes 11 provided on the second crown land portion 5B are arranged so as to overlap, in the tire circumferential direction, the second lateral sipes 12 provided on the third crown land portion 5C. The second lateral sipes 12 provided on the second crown land portion 5B are arranged so as to overlap, in the tire circumferential direction, the first lateral sipes 11 provided on the third crown land portion 5C. Thus, the stiffness of the crown region 4 can be inhibited from being locally reduced, so that wear resistance and fuel consumption performance can be assuredly maintained.

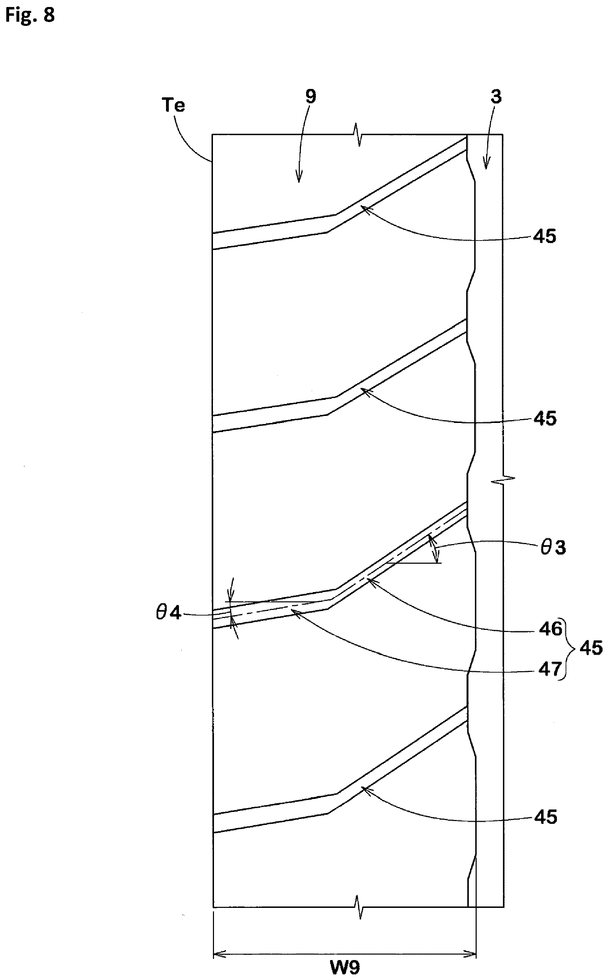

As shown in FIG. 1, the tread portion 2 of the present embodiment includes shoulder land portions 9 demarcated so as to be disposed outward of the crown circumferential grooves 3 in the tire axial direction. FIG. 8 is an enlarged view of each shoulder land portion 9. As shown in FIG. 8, a maximum width W9 in the tire axial direction of the shoulder land portion 9 is, for example, 15% to 25% of the tread width TW.

A plurality of shoulder lateral grooves 45 are provided on the shoulder land portion 9. The shoulder lateral grooves 45, for example, extend from the crown circumferential groove 3 to the tread end Te so as to be inclined. Each shoulder lateral groove 45 of the present embodiment includes an inner inclined portion 46 communicating with the crown circumferential groove 3, and an outer inclined portion 47 communicating with the tread end Te. The inner inclined portion 46, for example, linearly extends at a larger angle relative to the tire axial direction than the lateral sipe 10 provided on the crown land portion 5 (shown in FIG. 2). An angle θ3 of the inner inclined portion 46 relative to the tire axial direction is, for example, 25 to 40°. The outer inclined portion 47, for example, linearly extends at a smaller angle relative to the tire axial direction than the inner inclined portion 46. An angle θ4 of the outer inclined portion 47 relative to the tire axial direction is, for example, 5 to 20°, and the angle difference between the angle θ4 and the angle θ2 (shown in FIG. 2) of the lateral sipe 10 relative to the tire axial direction is not greater than 5°. Such shoulder lateral grooves 45 serve to enhance traction performance and cornering performance on a wet road surface in a well-balanced manner.

The shoulder lateral groove 45 is preferably formed to have a smaller depth than the lateral sipe 10. Specifically, the maximum depth of the shoulder lateral groove 45 is preferably 1.5 to 2.5 mm. Such shoulder lateral grooves 45 can maintain the stiffness of the shoulder land portion 9 at a high level, so that excellent fuel consumption performance and wear resistance can be exhibited.

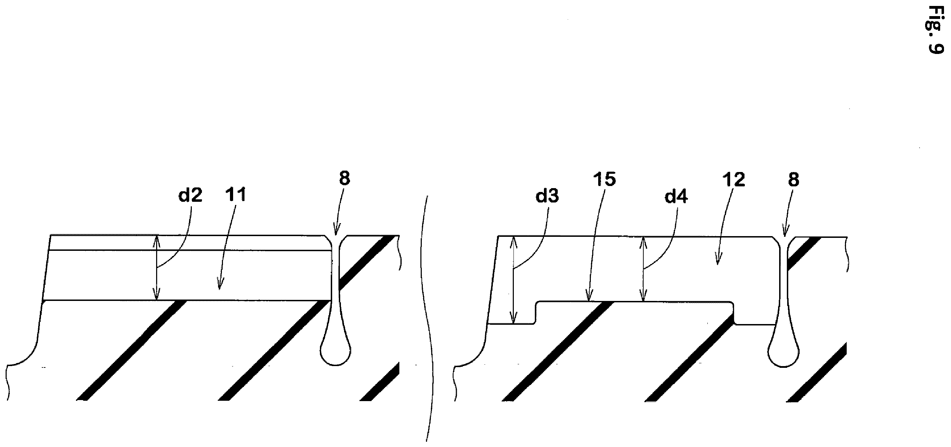

FIG. 9 is an enlarged cross-sectional view of a first lateral sipe 11 and a second lateral sipe 12 according to another embodiment of the present invention. As shown in FIG. 9, in this embodiment, the depth d2 of the first lateral sipe 11 is smaller than the maximum depth d3 of the second lateral sipe 12. Specifically, the depth d2 of the first lateral sipe 11 is 90% to 110% of the minimum depth d4 of the shallow bottom portion 15 of the second lateral sipe 12, and, in a preferable mode, the depth d2 is equal to the depth d4. In this embodiment, as compared to the embodiment shown in FIG. 4 and FIG. 5, fuel consumption performance can be further improved. Each configuration in the embodiment described with reference to FIG. 1 to 7 can be applied to a configuration that is not described in the embodiment shown in FIG. 9.

Although the tire of the one embodiment of the present invention has been described in detail above, the present invention is not limited to the above specific embodiments but only by the appended claims.

## Claims

1. A heavy duty tire (1) comprising a tread portion (2), wherein
the tread portion (2) includes a pair of crown circumferential grooves (3) continuously extending in a tire circumferential direction, and a crown region (4) between the pair of crown circumferential grooves (3),
the crown region (4) includes a plurality of crown land portions (5)
at least one of the plurality of crown land portions (5) is a first crown land portion on which a plurality of lateral sipes (10) fully crossing a tread surface of the crown land portion (5) in a tire axial direction are provided,
the plurality of lateral sipes (10) include first lateral sipes (11) and second lateral sipes (12),
the tire is **characterized in that** the plurality of land portions (5) is demarcated by at least one circumferential sipe (8) continuously extending in the tire circumferential direction,
each first lateral sipe (11) has a constant depth over an entire range in a sipe length direction thereof, and
each second lateral sipe (12) includes a shallow bottom portion (15) located in a center portion in a sipe length direction thereof, where a depth thereof is partially reduced.

2. The heavy duty tire (1) according to claim 1, wherein a land ratio of the tread portion (2) is 80% to 95%.

3. The heavy duty tire (1) according to claim 1 or 2, wherein
the circumferential sipe (8) includes a sipe body (21) extending with a constant width (W3) in a tire radial direction, and a widened portion (22) connected to an inner side in the tire radial direction of the sipe body (21) and having a greater width than the width (W3) of the sipe body (21).

4. The heavy duty tire (1) according to claim 3, wherein a bottom portion (11d) of the first lateral sipe (11) is connected to the widened portion (22) of the circumferential sipe (8).

5. The heavy duty tire (1) according to claim 3 or 4, wherein the shallow bottom portion (15) of the second lateral sipe (12) is located outward of the widened portion (22) of the circumferential sipe (8) in the tire radial direction.

6. The heavy duty tire (1) according to any one of claims 1 to 5, wherein a depth (d2) of the first lateral sipe (11) is 60% to 75% of a maximum depth (d1) of the circumferential sipe (8).

7. The heavy duty tire (1) according to any one of claims 1 to 6, wherein a minimum depth (d4) of the shallow bottom portion (15) of the second lateral sipe (12) is 45% to 55% of the maximum depth (d1) of the circumferential sipe (8).

8. The heavy duty tire (1) according to any one of claims 1 to 7, wherein
the second lateral sipe (12) includes a first deep bottom portion (31) disposed on one side in the tire axial direction of the shallow bottom portion (15), and a second deep bottom portion (32) disposed on another side in the tire axial direction of the shallow bottom portion (15), and
a length (L3) in the tire axial direction of the shallow bottom portion (15) is greater than a length (L4) in the tire axial direction of the first deep bottom portion (31) and is greater than a length (L5) in the tire axial direction of the second deep bottom portion (32).

9. The heavy duty tire (1) according to any one of claims 1 to 8, wherein
the plurality of crown land portions (5) include a second crown land portion adjacent to the first crown land portion across the circumferential sipe (8),
a plurality of the lateral sipes (10) are provided on the second crown land portion , and in a tread plan view, the plurality of lateral sipes (10) provided on the first crown land portion are arranged so as to respectively overlap, in the tire circumferential direction, the lateral sipes (10) provided on the second crown land portion .

10. The heavy duty tire according to claim 9, wherein
in a tread plan view, the first lateral sipes (11) provided on the first crown land portion are arranged so as to overlap, in the tire circumferential direction, the second lateral sipes (12) provided on the second crown land portion.

## Patentansprüche

1. Schwerlastreifen (1), der einen Laufflächenabschnitt (2) umfasst, wobei
der Laufflächenabschnitt (2) ein Paar Kronenumfangsrillen (3), die sich kontinuierlich in einer Reifenumfangsrichtung erstrecken, und einen Kronenbereich (4) zwischen dem Paar Kronenumfangsrillen (3) umfasst,
der Kronenbereich (4) eine Vielzahl von Kronenlandabschnitten (5) umfasst,
mindestens einer der Vielzahl von Kronenlandabschnitten (5) ein erster Kronenlandabschnitt ist, auf dem eine Vielzahl von Querfeinschnitten (10) vorgesehen ist, die eine Laufflächen-Oberfläche des Kronenlandabschnitts (5) in einer Reifenaxialrichtung vollständig kreuzen,
die Vielzahl von Querfeinschnitten (10) erste Querfeinschnitte (11) und zweite Querfeinschnitte (12) umfasst,
der Reifen **dadurch gekennzeichnet ist, dass** die Vielzahl von Landabschnitten (5) durch mindestens einen Umfangsfeinschnitt (8) abgegrenzt ist, der sich kontinuierlich in der Reifenumfangsrichtung erstreckt,
jeder erste Querfeinschnitt (11) eine konstante Tiefe über einen gesamten Bereich in einer Feinschnittlängsrichtung davon aufweist, und
jeder zweite Querfeinschnitt (12) einen flachen Bodenabschnitt (15) umfasst, der sich in einem Mittelabschnitt in einer Feinschnittlängsrichtung davon befindet, wo eine Tiefe davon teilweise reduziert ist.

2. Schwerlastreifen (1) nach Anspruch 1, wobei ein Landverhältnis des Laufflächenabschnitts (2) 80 % bis 95 % beträgt.

3. Schwerlastreifen (1) nach Anspruch 1 oder 2, wobei der Umfangsfeinschnitt (8) einen Feinschnittkörper (21), der sich mit einer konstanten Breite (W3) in einer Reifenradialrichtung erstreckt, und einen verbreiterten Abschnitt (22) umfasst, der mit einer Innenseite in der Reifenradialrichtung des Feinschnittkörpers (21) verbunden ist und eine größere Breite als die Breite (W3) des Feinschnittkörpers (21) aufweist.

4. Schwerlastreifen (1) nach Anspruch 3, wobei ein Bodenabschnitt (11d) des ersten Querfeinschnitts (11) mit dem verbreiterten Abschnitt (22) des Umfangsfeinschnitts (8) verbunden ist.

5. Schwerlastreifen (1) nach Anspruch 3 oder 4, wobei sich der flache Bodenabschnitt (15) des zweiten Querfeinschnitts (12) in der Reifenradialrichtung außerhalb des verbreiterten Abschnitts (22) des Umfangsfeinschnitts (8) befindet.

6. Schwerlastreifen (1) nach einem der Ansprüche 1 bis 5, wobei eine Tiefe (d2) des ersten Querfeinschnitts (11) 60 % bis 75 % einer maximalen Tiefe (d1) des Umfangsfeinschnitts (8) beträgt.

7. Schwerlastreifen (1) nach einem der Ansprüche 1 bis 6, wobei eine minimale Tiefe (d4) des flachen Bodenabschnitts (15) des zweiten Querfeinschnitts (12) 45 % bis 55 % der maximalen Tiefe (d1) des Umfangsfeinschnitts (8) beträgt.

8. Schwerlastreifen (1) nach einem der Ansprüche 1 bis 7, wobei
der zweite Querfeinschnitt (12) einen ersten tiefen Bodenabschnitt (31), der auf einer Seite in der Reifenaxialrichtung des flachen Bodenabschnitts (15) angeordnet ist, und einen zweiten tiefen Bodenabschnitt (32), der auf einer anderen Seite in der Reifenaxialrichtung des flachen Bodenabschnitts (15) angeordnet ist, umfasst, und
eine Länge (L3) in der Reifenaxialrichtung des flachen Bodenabschnitts (15) größer als eine Länge (L4) in der Reifenaxialrichtung des ersten tiefen Bodenabschnitts (31) und größer als eine Länge (L5) in der Reifenaxialrichtung des zweiten tiefen Bodenabschnitts (32) ist.

9. Schwerlastreifen (1) nach einem der Ansprüche 1 bis 8, wobei
die Vielzahl von Kronenlandabschnitten (5) einen zweiten Kronenlandabschnitt benachbart zu dem ersten Kronenlandabschnitt über den Umfangsfeinschnitt (8) hinweg umfassen,
eine Vielzahl der Querfeinschnitte (10) auf dem zweiten Kronenlandabschnitt vorgesehen sind und in einer Laufflächendraufsicht die Vielzahl von Querfeinschnitten (10), die auf dem ersten Kronenlandabschnitt vorgesehen sind, so angeordnet sind, dass sie jeweils in der Reifenumfangsrichtung die Querfeinschnitte (10) überlappen, die auf dem zweiten Kronenlandabschnitt vorgesehen sind.

10. Schwerlastreifen nach Anspruch 9, wobei in einer Laufflächendraufsicht die ersten Querfeinschnitte (11), die auf dem ersten Kronenlandabschnitt vorgesehen sind, so angeordnet sind, dass sie in der Reifenumfangsrichtung die zweiten Querfeinschnitte (12) überlappen, die auf dem zweiten Kronenlandabschnitt vorgesehen sind.

## Revendications

1. Pneu pour poids lourds (1) comprenant une portion de bande de roulement (2), dans lequel la portion de bande de roulement (2) comprend une paire de rainures circonférentielles en couronne (3) s'étendant en continu dans une direction circonférentielle de pneu et une zone de couronne (4) entre la paire de rainures circonférentielles en couronne (3),
la zone de couronne (4) comporte une pluralité de portions d'appui de couronne (5),
au moins une de la pluralité des portions d'appui de couronne (5) est une première portion d'appui de couronne sur laquelle une pluralité de fentes latérales (10) traversant entièrement une surface de bande de roulement de la portion d'appui de couronne (5) dans une direction axiale sont fournies, la pluralité de fentes latérales (10) comportent des premières fentes latérales (11) et des secondes fentes latérales (12),
le pneu est **caractérisé en ce que** la pluralité de portions d'appui (5) est démarquée par au moins une fente circonférentielle (8) s'étendant en continu dans la direction circonférentielle de pneu,
chaque première fente latérale (11) a une profondeur constante sur une plage entière dans une de ses directions de longueur de fente et chaque seconde fente latérale (12) comporte une portion de partie inférieure superficielle (15) située dans une portion centrale dans une de ses directions de longueur de fente, où une de ses profondeurs est partiellement réduite.

2. Pneu pour poids lourd (1) selon la revendication 1, dans lequel un rapport d'appui de la portion de bande de roulement (2) est de 80 % à 95 %.

3. Pneu pour poids lourds (1) selon la revendication 1 ou 2, dans lequel la fente circonférentielle (8) comprend un corps de fente (21) s'étendant avec une largeur constante (W3) dans une direction radiale de pneu et une portion élargie (22) connectée à un côté interne dans la direction radiale du corps de fente (21) et ayant une largeur plus grande que la largeur (W3) du corps de fente (21).

4. Pneu pour poids lourds (1) selon la revendication 3, dans lequel une portion de partie inférieure (11d) de la première fente latérale (11) est connectée à la portion élargie (22) de la fente circonférentielle (8).

5. Pneu pour poids lourds (1) selon la revendication 3 ou 4, dans lequel la portion de partie inférieure superficielle (15) de la seconde fente latérale (12) est située vers l'extérieur de la portion élargie (22) de la fente circonférentielle (8) dans la direction radiale de pneu.

6. Pneu pour poids lourds (1) selon l'une quelconque des revendications 1 à 5, dans lequel une profondeur (d2) de la première fente latérale (11) est de 60 % à 75 % d'une profondeur maximum (d1) de la fente circonférentielle (8).

7. Pneu pour poids lourds (1) selon l'une quelconque des revendications 1 à 6, dans lequel une profondeur minimum (d4) de la portion de partie inférieure superficielle (15) de la seconde fente latérale (12) est de 45 % à 55 % de la profondeur maximum (d1) de la fente circonférentielle (8).

8. Pneu pour poids lourds (1) selon l'une quelconque des revendications 1 à 7, dans lequel
la seconde fente latérale (12) comprend une première portion de partie inférieure profonde (31) disposée sur un côté dans la direction radiale de pneu de la portion de partie inférieure superficielle (15) et une seconde portion de partie inférieure profonde (32) disposée sur un autre côté dans la direction axiale de pneu de la portion de partie inférieure superficielle (15) et
une longueur (L3) dans la direction axiale de pneu de la portion de partie inférieure superficielle (15) est plus grande qu'une longueur (L4) dans la direction axiale de pneu de la première portion de partie inférieure profonde (31) et est plus grande qu'une longueur (L5) dans la direction axiale de pneu de la seconde portion de partie inférieure profonde (32).

9. Pneu pour poids lourds (1) selon l'une quelconque des revendications 1 à 9, dans lequel
la pluralité de portions d'appui de couronne (5) comprennent une seconde portion d'appui de couronne adjacente à la première portion d'appui de couronne à travers la fente circonférentielle (8),
une pluralité des fentes latérales (10) sont prévues sur la seconde portion d'appui de couronne et dans une vue en plan de la bande de roulement, la pluralité de fentes latérales (10) prévues sur la première portion d'appui de couronne sont disposées de manière à chevaucher respectivement, dans la direction circonférentielle de pneu, les fentes latérales (10) prévues sur la seconde portion d'appui de couronne.

10. Pneu pour poids lourds selon la revendication 9, dans lequel
dans une vue en plan de bande de roulement, les premières fentes latérales (11) prévues sur la première portion d'appui de couronne sont disposées de manière à chevaucher, dans la direction circonférentielle de pneu, les secondes fentes latérales (12) prévues sur la seconde d'appui de couronne.
